# EUROPEAN PATENT APPLICATION

(11) **EP 4 615 046 A1**
(43) Date of publication of application: **10.09.2025**
(21) Application number: 22963988.5
(22) Date of filing: 03.11.2022
(51) Int. Cl.: H04W 28/02

(54) **INFORMATION TRANSMISSION CONTROL METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/129689
(87) International publication number: WO 2024/092678

(57) **Abstract**

Provided in the embodiments of the present disclosure are an information transmission control method and apparatus, and a communication device and a storage medium, wherein the information transmission control method is executed by a terminal. The method comprises: reporting a buffer status report (BSR) of a predetermined type upon detecting that predetermined data is present in a logical channel. Thus, more accurate data transmission scheduling can be performed for the transmission of predetermined data, thereby reducing the number of occasions in which data transmission scheduling based on a data flow level is untimely due to a mismatch with the urgency degree of the data itself.

## Description

### TECHNICAL FIELD

The disclosure relates to, but is not limited to, the field of wireless communication technology, and in particular to a method and an apparatus for controlling information transmission, a communication device, and a storage medium.

### BACKGROUND

In services such as extended reality (XR), service data is typically composed of a plurality of quality of service (QoS) flows. During transmission, the service flows often need to meet latency requirements that some data flows simultaneously arrive at a server for decoding, among others. If transmission of any data flow is delayed, a joint decoding of the plurality of data flows may fail. However, the reporting mechanisms of buffer status report (BSR) in the related art primarily consider the degree of urgency among data flows or logical channels, but lack accuracy in reflecting the degree of urgency of the data, which often results in delays in data transmission scheduling.

### SUMMARY

Embodiments of the disclosure provide a method and an apparatus for controlling information transmission, a communication device, and a storage medium.

A first aspect of embodiments of the disclosure provides a method for controlling information transmission. The method is performed by a terminal, including: when detecting that predefined data exists in a logical channel (LC), reporting a buffer status report (BSR) of a predefined type.

A second aspect of embodiments of the disclosure provides a method for controlling information transmission. The method is performed by a network device, including: receiving a BSR of a predefined type reported by a terminal when predefined data exists in an LC.

A third aspect of embodiments of the disclosure provides an apparatus for controlling information transmission. The apparatus is configured in a terminal, including: a reporting unit, configured to, when detecting that predefined data exists in an LC, report a BSR of a predefined type.

A fourth aspect of embodiments of the disclosure provides an apparatus for controlling information transmission. The apparatus is configured in a network device, including: a receiving unit, configured to, receive a BSR of a predefined type reported by a terminal when predefined data exists in an LC.

A fifth aspect of embodiments of the disclosure provides a communication device. The communication device includes a processor and a memory storing instructions executable by the processor which, when executed by the processor, implement the method for controlling information transmission provided in the first aspect or in the second aspect.

A sixth aspect of embodiments of the disclosure provides a computer storage medium. The computer storage medium stores a computer-executable program which, when executed by a processor, enable the method for controlling information transmission provided in the first aspect or in the second aspect to be implemented.

In the technical solution provided in embodiments of the disclosure, when detecting that the predefined data exists in the LC, the BSR of the predefined type is reported. In this case, the base station may be informed of a situation of the predefined data when there is a need to transmit the predefined data. The sent BSR of the predefined type enables the base station to determine that predefined data to be transmitted exists, thus allowing more precise data transmission scheduling for the predefined data. This reduces a situation where there is untimely data transmission scheduling based on a data flow level due to a mismatch between scheduling priorities and urgency degrees of the data itself.

It should be understood that the above general description and the following detailed description are only exemplary and explanatory, which do not limit embodiments of the disclosure.

### BRIEF DESCRIPTION OF THE DRAWINGS

The figures herein are incorporated into the specification and constitute a part of the specification, showing that they conform to the embodiments of the disclosure, and are used together with the specification to illustrate the principles of the embodiments of the disclosure.
FIG. 1 is a schematic diagram illustrating an architecture of a wireless communication system according to an exemplary embodiment of the disclosure.
FIG. 2 is a flow chart illustrating a method for controlling information transmission according to an exemplary embodiment of the disclosure.
FIG. 3 is a flow chart illustrating a method for controlling information transmission according to an exemplary embodiment of the disclosure.
FIG. 4 is a flow chart illustrating a method for controlling information transmission according to an exemplary embodiment of the disclosure.
FIG. 5 is a flow chart illustrating a method for controlling information transmission according to an exemplary embodiment of the disclosure.
FIG. 6 is a flow chart illustrating a method for controlling information transmission according to an exemplary embodiment of the disclosure.
FIG. 7 is a structural block diagram illustrating an apparatus for controlling information transmission according to an exemplary embodiment of the disclosure.
FIG. 8 is a structural block diagram illustrating an apparatus for controlling information transmission according to an exemplary embodiment of the disclosure.
FIG. 9 is a structural block diagram illustrating a terminal according to an exemplary embodiment of the disclosure.
FIG. 10 is a structural block diagram illustrating a communication device according to an exemplary embodiment of the disclosure.

### DETAILED DESCRIPTION

Reference will now be made in detail to the exemplary embodiments, examples of which are illustrated in the accompanying figures. When the following description refers to the accompanying figures, the same numerals in different figures refer to the same or similar elements unless otherwise indicated. The implementations described in the following exemplary embodiments do not represent all implementations consistent with the embodiments of the disclosure. Rather, they are merely examples of devices and methods consistent with some aspects of the embodiments of the disclosure.

Terms used in the embodiments of the disclosure are for the purpose of describing specific embodiments only, and are not intended to limit the embodiments of the disclosure. As used in the disclosure, the singular forms "a/an", "said" and "the" are also intended to include the plural forms unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" as used herein may be interpreted as "in a case that" or "when" or "in response to a determination".

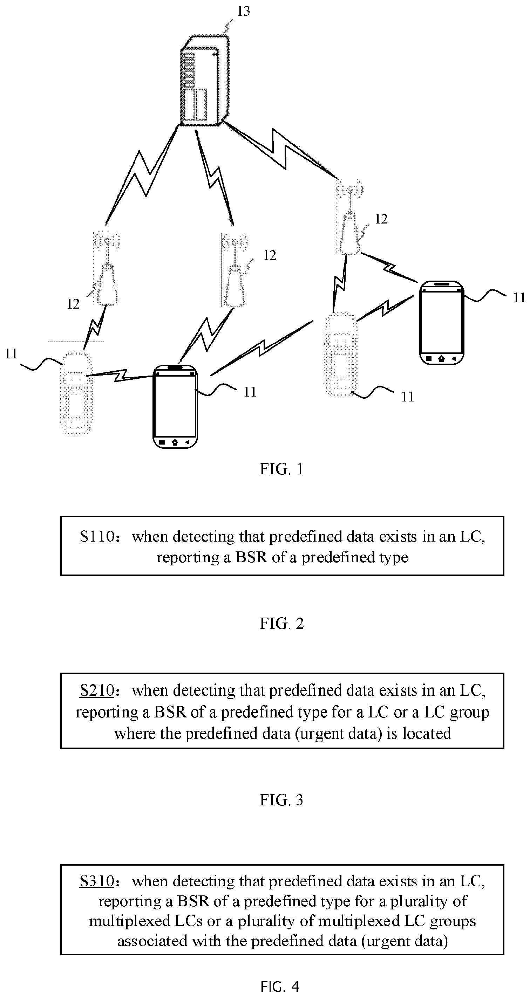

Referring to FIG. 1, which is a schematic diagram illustrating an architecture of a wireless communication system according to an embodiment of the disclosure. As shown in FIG. 1, the wireless communication system is a communication system based on mobile communication technology, and may include a plurality of terminals 11 and a plurality of access devices 12.

The terminal 11 may be devices that provide voice and/or data connectivity to the user. The terminal 11 may communicate with one or more core networks via a radio access network (RAN), and the terminal 11 may be internet of things (IoT) terminals, such as sensor devices, mobile telephones (also known as a "cellular" phone), and computers with IoT terminals, which may be for example, stationary, portable, pocket-size, hand-held, computer-built, or vehicle-mounted device. For example, the terminal 11 may be a station (STA), a subscriber unit, a subscriber station, a mobile station, a mobile, a remote station, an access point, a remote terminal, an access terminal, a user terminal, a user agent, a user device, or user equipment. Alternatively, the terminal 11 may also be an unmanned aerial vehicle (UAV) device. Alternatively, the terminal 11 may be an in-vehicle device, which for example, may be an electronic control unit (ECU) with wireless communication capabilities, or a wireless communication device that is connected to an external ECU. Alternatively, the terminal 11 may be a roadside device, e.g., may be a street light, a signal light, or other roadside device, etc., with wireless communication capabilities.

The access device 12 may be a network side device in a wireless communication system. The wireless communication system may be a 4th generation mobile communication (4G) system, also known as a long term evolution (LTE) system; or, the wireless communication system may also be a 5th generation mobile communication (5G) system, also known as a new radio (NR) system or a 5G NR system. Alternatively, the wireless communication system may be a further next-generation system of the 5G system. The access network in the 5G system may be referred to as a new generation-radio access network (NG-RAN) or a machine type communication (MTC) system.

The access device 12 may be an evolved base station (eNB) employed in the 4G system. Alternatively, the access device 12 may be a base station (gNB) using a centralized-distributed architecture in a 5G system. The access device 12, when adopting the centralized-distributed architecture, typically includes a central unit (CU) and at least two distributed units (DUs). The central unit is provided with protocol stacks for a packet data convergence protocol (PDCP) layer, a radio link control (RLC) layer, and a media access control (MAC) layer; the distributed unit is provided with protocol stacks for a physical (PHY) layer. The specific implementation of the access device 12 is not limited in embodiments of the disclosure.

A wireless connection may be established between the access device 12 and the terminal 11 through a radio interface. In various embodiments, the radio interface is a radio interface based on the 4G standard; or, the radio interface is a radio interface based on a 5G standard. For example, the radio interface is an NR interface; or, the radio interface may be a radio interface based on a further next-generation mobile communication standard based on the 5G.

Optional, the wireless communication system may also include a network management device 130. Several access devices 12 are each connected to the network management device 130. The network management device 130 may be a core network device in the wireless communication system. For example, the network management device 130 may be a mobility management entity (MME) in an evolved packet core (EPC) network. Alternatively, the network management device may be other core network devices, such as a serving gateway (SGW), a public data network gateway (PGW), a policy and charging rules function unit (PCRF), or a home subscriber server (HSS). The implementation form of the network management device 130 is not limited in embodiments of the disclosure.

As shown in FIG. 2, embodiments of the disclosure provide a method for controlling information transmission. The method is performed by a terminal, and includes the following step S110.

At step S110, when detecting that predefined data exists in a logical channel (LC), a buffer status report (BSR) of a predefined type is reported.

In an embodiment of the disclosure, the terminal may be a user equipment (UE) and so on. The LC is configured to transmit service data for a service to be processed, such as an extended reality (XR) service, and so on. The BSR is information reported by the terminal to a network side device when there is a need to request scheduling data, and is configured to notify and indicate the network side device to perform data transmission scheduling. The network side device may be a base station and so on.

In an embodiment, the predefined data may be data to be transmitted that has an urgent scheduling requirement, such as data with the highest urgency degree or data with an urgency degree that satisfies a predefined condition. For example, the predefined data may be determined based on at least one of: a service to be processed corresponding to the data, a data type, a source of the data, a content of the data, a generation moment of the data, or a moment at which the data is to be transmitted.

In an embodiment, the predefined data may be data to be transmitted that is important, such as data for which importance information is obtained from the network or from an application layer.

In an embodiment, the predefined data may include data to be transmitted with a specific scheduling requirement or data with a specific type attribute.

In an embodiment, the type of BSR includes a regular BSR, a periodic BSR, or a padding BSR and so on. The BSR of the predefined type reported in embodiments of the disclosure may be one of the BSR of the known types, such as the regular BSR, or may be a BSR of a new type that is different from any of the known types described above.

In an embodiment, detecting that the predefined data exists in the LC may be detecting that the predefined data exists in one or more LCs.

In an embodiment, detecting that the predefined data exists in the LC may be detecting that a remaining data delay budget corresponding to currently buffered data in the LC is less than or equal to a preset threshold. The preset threshold may be a preset fixed value. Alternatively, the preset threshold may also be determined based on channel information of the LC, a data transmission situation, or a data buffering situation.

For example, the preset threshold may be related to channel information such as a channel capacity of the LC, an occupancy rate of the LC, or a data loss rate of the LC, or the preset threshold may also be related to a data transmission situation and/or a data buffering situation of the LC within a certain time duration. For example, the higher the data buffering volume of the LC within the certain time duration, the higher the corresponding preset threshold may be.

In an embodiment, detecting that the predefined data exists in the LC may be detecting that the predefined data of the predefined service exists in the LC. The predefined service may be a preset service that needs prioritized scheduling of transmission data, such as an XR service and so on.

In an embodiment, detecting that the predefined data exists in the LC may be detecting that the predefined data to be transmitted exists in the LC and that a volume of the predefined data is higher than an upper threshold. The upper threshold may be a preset fixed value, or may also be set based on data information of the predefined data and/or channel information of the LC. For example, the upper threshold may be less than an upper threshold for data of other services when the service to be processed corresponding to the predefined data is the predefined service.

In an embodiment, the predefined data in the LC may be data of the predefined service obtained from a specified layer. For example, data of the XR service obtained from a non access stratum (NAS) or the application layer is the predefined data in the LC.

In an embodiment, reporting the BSR of the predefined type may be generating the BSR of the predefined type based on a volume of the predefined data to be transmitted in the LC and reporting the BSR of the predefined type. In this case, statistical analysis may be performed on the volume of the predefined data based on a data packet or a data packet set.

In an embodiment, reporting the BSR of the predefined type may be reporting the BSR of the predefined type for an LC or an LC group where the predefined data is located, or reporting the BSR of the predefined type for a plurality of LCs or a plurality of LC groups associated with the predefined data.

The plurality of LCs associated with the predefined data may be a plurality of multiplexed LCs for transmitting the predefined data. The plurality of LC groups associated with the predefined data may be a plurality of multiplexed LC groups for transmitting the predefined data.

In this case, the base station may be informed when the predefined data needs to be transmitted. The sent BSR of the predefined type enables the base station to determine that predefined data to be transmitted exists, thus allowing more precise data transmission scheduling for the predefined data. This reduces a situation where there is untimely data transmission scheduling based on a data flow level due to a mismatch between scheduling priorities and urgency degrees of the data itself, as compared to scheduling based on priorities between data flows or LCs.

As shown in FIG. 3, embodiments of the disclosure provide a method for controlling information transmission. The method is performed by a terminal, and includes the following step S210.

At step S210, when detecting that predefined data exists in an LC, a BSR of a predefined type is reported for an LC or an LC group where the predefined data is located.

In an embodiment of the disclosure, for the predefined data existing in the LC or in the LC group, the predefined data is reported at a level of one LC or one LC group where the predefined data is located. In this case, each LC or each LC group may report the BSR of the predefined type independently and respectively, without reporting from a multiplexed LC or multiplexed LC group. The BSR of the predefined type indicates that a remaining data delay budget corresponding to the predefined data is less than or equal to a preset threshold.

In an embodiment, reporting the BSR of the predefined type for the LC where the predefined data is located may be reporting the BSR of the predefined type based on a volume of the predefined data to be transmitted in the LC where the predefined data is located and/or the remaining data delay budget corresponding to the LC where the predefined data is located. For example, the volume and/or the remaining data delay budget of the predefined data to be transmitted are recorded in the BSR of the predefined type. The volume of the predefined data to be transmitted is equal to a buffer size.

The remaining data delay budget of the LC where the predefined data is located may be the remaining data delay budget corresponding to the data to be transmitted in the LC where the predefined data is located, or may also be the remaining data delay budget corresponding to the volume of the predefined data to be transmitted in the LC where the predefined data is located.

In an embodiment, reporting the BSR of the predefined type for the LC group where the predefined data is located may be reporting the BSR of the predefined type based on a total volume of the predefined data to be transmitted in the LC group where the predefined data is located and/or a remaining data delay budget corresponding to the LC group where the predefined data is located. For example, the total volume and/or the remaining data delay budget of the predefined data to be transmitted is recorded in the BSR of the predefined type.

In this case, the remaining data delay budget of the LC group where the predefined data is located may be the remaining data delay budget corresponding to the data to be transmitted in the LC group where the predefined data is located, or may also be the remaining data delay budget corresponding to the volume of the predefined data to be transmitted in the LC group where the predefined data is located. In this case, the remaining data delay budget corresponding to the LC may be the remaining data delay budget of the predefined data in the LC, the remaining data delay budget corresponding to the LC group may be the remaining data delay budget of the predefined data in the LC group.

In an embodiment, when detecting that the predefined data exists in the LC, the BSR of the predefined type is reported for the LC or the LC group where the predefined data is located, based on a protocol agreement or based on an indication or a configuration of a network side device.

In some embodiments, the BSR of the predefined type indicates that a remaining data delay budget of the LC or in the LC group where the predefined data is located is less than or equal to a preset threshold.

In an embodiment, the BSR of the predefined type may indicate, based on the type of the BSR or based on information such as an identity (ID) carried by the BSR, that the remaining data delay budget of the predefined data is less than or equal to the preset threshold. Alternatively, the BSR of the predefined type may also indicate, based on the recorded volume of data to be transmitted or the recorded remaining data delay budget, that the remaining data delay budget corresponding to the predefined data is less than or equal to the preset threshold.

In this case, reporting the BSR of the predefined type for a single LC or a single LC group may reduce differences in data transmission conditions that exist when a plurality of LCs or a plurality of LC groups are multiplexed, which makes unified reporting difficult.

As shown in FIG. 4, embodiments of the disclosure provide a method for controlling information transmission. The method is performed by a terminal, and includes the following step S310.

At step S310, when detecting that predefined data exists in an LC, a BSR of a predefined type is reported for a plurality of multiplexed LCs or a plurality of multiplexed LC groups associated with the predefined data.

In an embodiment of the disclosure, for the predefined data existing in the multiplexed LCs or in the multiplexed LC groups, the predefined data is reported at a level of the plurality of multiplexed LCs or the plurality of multiplexed LC groups associated with the predefined data. The reporting may be performed for the plurality of multiplexed LCs or the plurality of multiplexed LC groups via a BSR of a predefined type.

In an embodiment, reporting the BSR of the predefined type for the plurality of multiplexed LCs associated with the predefined data may be reporting the BSR of the predefined type based on a volume of the predefined data to be transmitted in the plurality of multiplexed LCs associated with the predefined data and/or a remaining data latency budget of the predefined data in the plurality of multiplexed LCs associated with the predefined data.

For example, volumes and/or remaining data delay budgets of the predefined data to be transmitted in the respective multiplexed LCs may be recorded in the BSR of the predefined type. Alternatively, a sum of or an average of the volumes of the predefined data to be transmitted in the respective multiplexed LCs, and/or the remaining data delay budgets of the predefined data to be transmitted in the respective multiplexed LCs, etc., may also be recorded in the BSR of the predefined type.

In this case, the remaining data delay budgets of the predefined data in the plurality of multiplexed LCs associated with the predefined data may be remaining data delay budgets corresponding to volumes of data to be transmitted in the respective multiplexed LCs associated with the predefined data, or may also be the remaining data delay budgets corresponding to volumes of the predefined data to be transmitted in the respective multiplexed LCs associated with the predefined data.

In an embodiment, reporting the BSR of the predefined type for the plurality of multiplexed LC groups associated with the predefined data may be reporting the BSR of the predefined type based on the volume of the predefined data to be transmitted in the plurality of multiplexed LC groups associated with the predefined data and/or the remaining data delay budget of the predefined data in the plurality of multiplexed LC groups associated with the predefined data.

For example, the volumes and/or the remaining data delay budgets of the predefined data to be transmitted in the respective multiplexed LC groups may be recorded in the BSR of the predefined type. Alternatively, a sum of or an average of the volumes of the predefined data to be transmitted in the respective multiplexed LCs, and/or the remaining data delay budgets of the predefined data to be transmitted in the respective multiplexed LC groups, etc., may also be recorded in the BSR of the predefined type.

In this case, the remaining data delay budgets of the predefined data in the plurality of multiplexed LC groups associated with the predefined data may be remaining data delay budgets corresponding to volumes of data to be transmitted in the respective multiplexed LC groups associated with the predefined data, or may also be remaining data delay budgets corresponding to volumes of the predefined data to be transmitted in the respective multiplexed LC groups associated with the predefined data.

In an embodiment, when detecting that the predefined data exists in the LC, the BSR of the predefined type is reported for the plurality of multiplexed LCs or the plurality of multiplexed LC groups associated with the predefined data based on a protocol agreement or based on an indication or a configuration of a network side device.

In some embodiments, the BSR of the predefined type indicates that a remaining data delay budget of the predefined data in at least one target LC among the plurality of multiplexed LCs is less than or equal to a preset threshold, or that a remaining data delay budget of the predefined data in at least one target LC group among the plurality of multiplexed LC groups is less than or equal to the preset threshold.

In an embodiment, the BSR of the predefined type may indicate, based on the type of the BSR or based on information such as an ID carried by the BSR, that the remaining data delay budget of the predefined data in the at least one target LC among the plurality of multiplexed LCs is less than or equal to the preset threshold, or that the remaining data delay budget of the predefined data in the at least one target LC group among the plurality of multiplexed LC groups is less than or equal to the preset threshold. Alternatively, the BSR of the predefined type may also indicate, based on information such as the recorded volume of data to be transmitted or the recorded remaining data delay budget, that the remaining data delay budget of the predefined data in the at least one target LC among the plurality of multiplexed LCs is less than or equal to the preset threshold, or that the remaining data delay budget of the predefined data in the at least one target LC group among the plurality of multiplexed LC groups is less than or equal to the preset threshold.

In an embodiment, the BSR of the predefined type may indicate that the remaining data delay budget of the predefined data in one target LC among the plurality of multiplexed LCs or the plurality of multiplexed LC groups is less than or equal to the preset threshold. For example, if the predefined data exists in only one LC of the plurality of multiplexed LCs, or if the remaining data delay budget of the predefined data in only one LC among the plurality of multiplexed LCs where the predefined data is located is less than or equal to the preset threshold, it may be indicated that, when reporting the BSR of the predefined type for the plurality of LCs, the remaining data delay budget of one target LC among the plurality of LCs is less than or equal to the preset threshold.

For example, the BSR of the predefined type may include a channel ID, etc., of one target LC with the remaining data delay budget being less than or equal to the preset threshold, for informing a base station that the situation where the remaining data delay budget of the predefined data in the target LC is less than or equal to the preset threshold triggers the reporting of the BSR of the predefined type, while the situation where the remaining data delay budget of the predefined data in other LCs than that target LC is less than or equal to the preset threshold does not trigger the reporting of the BSR of the predefined type. However, only data such as the volume or the remaining data delay budget of the data to be transmitted is reported in the BSR, the reporting of which is triggered in the target LC.

In an embodiment, the BSR of the predefined type may indicate that the remaining data delay budget for the predefined data in two or more target LCs of the plurality of multiplexed LCs or the plurality of multiplexed LC groups is less than or equal to the preset threshold. For example, if the predefined data exists in the plurality of multiplexed LCs, or if all the remaining data delay budgets of the predefined data in the plurality of multiplexed LCs where the predefined data is located are less than or equal to the predefined threshold, it may be indicated, when reporting the BSR of the predefined type for the plurality of LCs, that all the remaining data delay budgets of the plurality of LCs are less than or equal to the preset threshold.

The description of the plurality of multiplexed LC groups may refer to the preceding description of the plurality of multiplexed LCs, which may also be applied to the plurality of multiplexed LC groups, and will not be repeated herein.

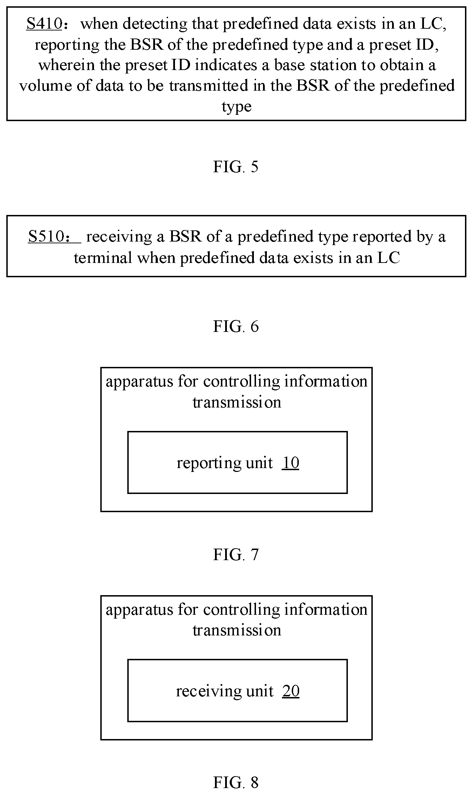

As shown in FIG. 5, embodiments of the disclosure provide a method for controlling information transmission. The method is performed by a terminal, and includes the following step S410.

At step S410, when detecting that predefined data exists in an LC, a BSR of a predefined type and a preset ID are reported, in which the preset ID indicates a base station to obtain a volume of data to be transmitted in the BSR of the predefined type.

In an embodiment of the disclosure, the preset ID may be configured to inform the base station that the BSR of the predefined type indicates that a remaining data delay budget is less than or equal to a preset threshold. Alternatively, the preset ID may be indicate the base station to obtain the volume of data to be transmitted recorded in the BSR of the predefined type and to determine whether a remaining data delay budget corresponding to the volume of data to be transmitted is less than or equal to the preset threshold.

In an embodiment, the volume of data to be transmitted in the BSR of the predefined type may be a volume of terminal buffered data recorded in the BSR of the predefined type.

In an embodiment, when the predefined type is not a new type, the BSR of the predefined type and the preset ID may be reported. Thus, when the base station is incapable of determining whether the received BSR indicates the predefined data, the base station may obtain the volume of data to be transmitted in the BSR based on the preset ID for determination. This reduces a situation where since the base station is incapable of actively obtaining the volume of the data to be transmitted, the reporting of the BSR with the predefined data is ignored.

In some embodiments, the preset ID includes a media access control-control element (MAC-CE) extended logical channel ID (LCID) of at least one BSR in a predefined format. The LCID indicates the base station to obtain the volume of data to be transmitted in the BSR of the predefined type when the reported BSR of the predefined type is a BSR in the predefined format.

In an embodiment of the disclosure, an LCID may correspond to a predefined format of a BSR. For example, the predefined format may include a long format and a short format. The long format of the BSR may be a BSR with a length of 8 bits. The short format of the BSR may be a BSR with a length of 5 bits.

In an embodiment, reporting the BSR of the predefined type and the preset ID may include reporting the BSR of the predefined type and an LCID corresponding to the predefined format of the BSR. For example, the LCID may include only one LCID indicating a predefined format for reporting the BSR of the predefined type corresponding to the predefined format. For example, if the predefined format is the long format, the BSR of the predefined type may be reported only for an LC or an LC group corresponding to the long format among a plurality of multiplexed LCs or a plurality of multiplexed LC groups associated with the predefined data, when the BSR of the predefined type is reported for the plurality of multiplexed LCs or the plurality of multiplexed LC groups associated with the predefined data.

In an embodiment, the method may further include: sending the LCID in advance to the network side device for storage. Thus, when reporting the BSR of the predefined type, the network side device may determine, based on the predefined format corresponding to the BSR, whether there is a need to obtain the volume of data to be transmitted recorded by the BSR. Alternatively, when reporting the BSR of the predefined type and the LCID, the network side device may determine, based on whether the reported LCID is consistent with the LCID stored in advance, whether the there is a need to obtain the volume of data to be transmitted recorded by the BSR. When the reported LCID is consistent with the LCID stored in advance, the network side device obtains the volume of data to be transmitted recorded by the BSR and determine whether the remaining data delay budget corresponding to the volume of data to be transmitted is less than or equal to the preset threshold value.

In this case, indicating the reported BSR of the predefined type based on the preset ID may more clearly and accurately indicate whether the BSR is needed to respond to obtain the volume of data to be transmitted recorded by the BSR. This improves a response accuracy of the base station to the BSR, and reduces delays of responding to transmission scheduling of the predefined data or failure to respond to the transmission scheduling of the predefined data.

In some embodiments, the predefined data includes data obtained from an NAS or an application layer for a predefined service.

In some embodiments, detecting that the predefined data exists in the LC includes: detecting that a remaining data delay budget corresponding to buffered data in the LC is less than or equal to a preset threshold.

In some embodiments, reporting the BSR of the predefined type includes: performing statistical analysis on the predefined data based on a data packet or a data packet set, and generating the BSR of the predefined type based on a statistical result; and reporting the BSR of the predefined type.

As shown in FIG. 6, embodiments of the disclosure provide a method for controlling information transmission. The method is performed by a network device, and includes the following step S510.

At step S510, a BSR of a predefined type reported by a terminal when predefined data exists in an LC is received.

In an embodiment of the disclosure, the predefined data may be data to be transmitted that has an urgent scheduling requirement, such as data with the highest urgency degree or data with an urgency degree that satisfies a predefined condition. For example, the predefined data may be determined based on at least one of: a service to be processed corresponding to the data, a data type, a source of the data, a content of the data, a generation moment of the data, or a moment at which the data is to be transmitted.

In an embodiment, the type of BSR includes a regular BSR, a periodic BSR, or a padding BSR and so on. The BSR of the predefined type reported in embodiments of the disclosure may be one of the BSR of the known types, such as the regular BSR, or may be a BSR of a new type that is different from any of the known types described above.

In an embodiment, the predefined data existing in the LC may be that the predefined data exists in one or more LCs.

In an embodiment, the predefined data existing in the LC may be that a remaining data delay budget corresponding to currently buffered data in the LC is less than or equal to a preset threshold. The preset threshold may be a preset fixed value. Alternatively, the preset threshold may also be determined based on channel information of the LC, a data transmission situation, or a data buffering situation.

For example, the preset threshold may be related to channel information such as a channel capacity of the LC, an occupancy rate of the LC, or a data loss rate of the LC, or the preset threshold may also be related to a data transmission situation and/or a data buffering situation of the LC within a certain time duration. For example, the higher the data buffering volume of the LC within the certain time duration, the higher the corresponding preset threshold may be.

In an embodiment, the predefined data existing in the LC may be that the predefined data of the predefined service exists in the LC. The predefined service may be a predefined service that needs prioritized scheduling of transmission data, such as an XR service and so on.

In an embodiment, the predefined data existing in the LC may be that the predefined data to be transmitted exists in the LC and that a volume of the predefined data is higher than an upper threshold. The upper threshold may be a preset fixed value, or may also be set based on data information of the predefined data and/or channel information of the LC. For example, the upper threshold may be less than an upper threshold for data of other services when the service to be processed corresponding to the predefined data is the predefined service.

In an embodiment, the predefined data in the LC may be data of the predefined service obtained by the terminal from a specified layer. For example, data of the XR service obtained from an NAS or the application layer is the predefined data in the LC.

In an embodiment, reporting the BSR of the predefined type may be generating the BSR of the predefined type based on a volume of the predefined data to be transmitted in the LC and reporting the BSR of the predefined type. In this case, statistical analysis may be performed on the volume of the predefined data based on a data packet or a data packet set.

In an embodiment, the BSR of the predefined type may be the BSR of the predefined type reported for an LC or an LC group where the predefined data is located, or the BSR of the predefined type reported for a plurality of LCs or a plurality of LC groups associated with the predefined data.

The plurality of LCs associated with the predefined data may be a plurality of multiplexed LCs for transmitting the predefined data. The plurality of LC groups associated with the predefined data may be a plurality of multiplexed LC groups for transmitting the predefined data.

In this case, the base station may be informed when the predefined data needs to be transmitted. The sent BSR of the predefined type enables the base station to determine that predefined data to be transmitted exists, thus allowing more precise data transmission scheduling for the predefined data. This reduces a situation where there is untimely data transmission scheduling based on a data flow level due to a mismatch between scheduling priorities and urgency degrees of the data itself, as compared to scheduling based on priorities between data flows or LCs.

In some embodiments, the BSR of the predefined type may include: the BSR of the predefined type for an LC or an LC group where the predefined data is located.

In some embodiments, the method may further include: determining, based on the BSR of the predefined type, that a remaining data delay budget corresponding to the predefined data is less than or equal to a preset threshold.

In an embodiment of the disclosure, when determining the BSR of the predefined type for the LC or the LC group where the predefined data is located based on a protocol agreement or a configuration of a network side device, it may be directly determined based on the situation that the remaining data latency budget of the LC or the LC group corresponding to the BSR is less than or equal to the preset threshold.

In some embodiments, the BSR of the predefined type includes: the BSR of the predefined type for a plurality of multiplexed LCs or a plurality of multiplexed LC groups associated with the predefined data.

In some embodiments, the method may further include: determining, based on the BSR of the predefined type, that a remaining data delay budget of the predefined data in at least one target LC among the plurality of multiplexed LCs is less than or equal to a preset threshold, or that a remaining data delay budget of the predefined data in at least one target LC group among the plurality of multiplexed LC groups is less than or equal to the preset threshold.

In an embodiment, when determining the BSR of the predefined type for the plurality of multiplexed LCs or the plurality of multiplexed LC groups associated with the predefined data based on the protocol agreement or the configuration of the network side device, it may be determined that a remaining data delay budget of the predefined data in a specified target LC among the plurality of multiplexed LCs is less than or equal to the preset threshold. Alternatively, it may be determined that the remaining data delay budget of the predefined data in a specified target LC group among the plurality of multiplexed LC groups is less than or equal to the preset threshold.

In an embodiment, when determining the BSR of the predefined type for the plurality of multiplexed LCs or the plurality of multiplexed LC groups associated with the predefined data based on the protocol agreement or the configuration of the network side device, it may also be determined that remaining data delay budgets of two or more LCs of the plurality of multiplexed LCs are less than or equal to the preset threshold. For example, all remaining data delay budgets for all LCs are less than or equal to the preset threshold. Alternatively, it is determined that remaining data delay budgets of two or more LC groups of the plurality of multiplexed LC groups are less than or equal to the preset threshold. For example, the remaining data delay budgets of all LC groups are less than or equal to the preset threshold.

In some embodiments, receiving the BSR of the predefined type reported by the terminal when the predefined data exists in the LC includes: receiving the BSR of the predefined type and a preset ID reported by the terminal when the predefined data exists in the LC, in which the preset ID indicates the BSR of the predefined type.

The method may further include: obtaining a volume of data to be transmitted in the BSR of the predefined type based on the preset ID; and if a remaining data delay budget corresponding to the volume of data to be transmitted is less than or equal to a preset threshold, performing data transmission scheduling based on the BSR of the predefined type.

In an embodiment of the disclosure, when receiving the preset ID, the base station may know that it is needed to determine whether the remaining data delay budget of the BSR of the predefined type corresponding to the preset ID is less than or equal to a preset threshold. For example, the base station may determine this by obtaining a volume of data to be transmitted recorded in the BSR. When the remaining data delay budget is less than or equal to the preset threshold, it is determined that the predefined data exists in the corresponding LC or the corresponding LC group, transmission scheduling for the predefined data is executed based on the BSR of the predefined type, and the transmission scheduling for the predefined data is optimized.

In some embodiments, the preset ID includes a MAC-CE extended LCID of at least one BSR in a predefined format.

In some embodiments, obtaining the volume of data to be transmitted in the BSR of the predefined type based on the preset ID includes: obtaining the volume of data to be transmitted in the BSR of the predefined type based on the preset ID when the BSR of the predefined type is a BSR in the predefined format.

In embodiments of the disclosure, when the format of the received BSR of the predefined type is consistent with the predefined format corresponding to the LCID, the base station may need to determine, for the BSR of the predefined type, whether the remaining data delay budget is less than or equal to the predefined threshold. For example, the base station may determine it by obtaining the volume of data to be transmitted recorded in the BSR. When the remaining data delay budget is less than or equal to the preset threshold, it is determined that the predefined data exists in the corresponding LC or the corresponding LC group, transmission scheduling for the predefined data is executed based on the BSR of the predefined type, and the transmission scheduling for the predefined data is optimized.

In some embodiments, the predefined data includes data obtained from an NAS or an application layer for a predefined service.

In some embodiments, the predefined data existing in the LC includes that, a remaining data delay budget corresponding to buffered data in the LC is less than or equal to a preset threshold.

Embodiments of the disclosure provide a scheme that the BSR (the BSR of the predefined type) is reported for specific data.
1. The reporting of the BSR of the predefined type is triggered by the predefined data in the LC for the XR service.

As an embodiment, the predefined data may be predefined data with a high scheduling urgency requirement in the XR service for the specific data obtained from the NAS or the application layer.

As an embodiment, the predefined data may be data buffered in the LC with a remaining data delay budget less than or equal to a certain preset threshold.

The preset threshold may be informed to the terminal by the network, may be configured based on the LC group, or may be configured based on the LC.

As an embodiment, the statistical analysis may be performed on the predefined data based on the data packet or the data packet set.

2. The BSR of the predefined type is one of the regular BSRs or named as a BSR of a new type.

3. The protocol makes an agreement or the network side device configures that the BSR (the BSR of the predefined type) is reported at the level of a single LC or a single LC group, i.e., no multiplexed LC or multiplexed LC group is performed.

As an embodiment, a volume of data reported by the BSR of the predefined type is equal to a buffer size.

As an embodiment, the volume of data reported by the BSR of the predefined type is only for a single LC or a single LC group (only indicating that the remaining data delay budget of the buffered data in the single LC or the single LC group is less than or equal to a certain threshold, i.e., the delay budget is about to be exhausted).

As an embodiment, the volume of data reported by the BSR of the predefined type is only for a single LC or a single LC group, while the volume of data is not reported simultaneously with other LCs or LC groups. In this way, the base station only needs to be aware of a scheduling requirement of the single LC or the single LC group, enabling process simplification.

As an embodiment, if the reporting of the BSR of the predefined type is triggered in one LC, and even if the reporting of the BSR is also triggered in other LCs at the same time, the reported BSR only carries the volume of data in the LC where the reporting of the BSR of the predefined type has been triggered, but not carry the data in the other LCs.

As an embodiment, if the reporting of the BSR of the predefined type is triggered in one LC, and even if the reporting of the BSR is triggered in other LCs (assuming in an LCG2) at the same time, the reported BSR only carries the volume of data in an LCG1 where an LC is located (the reporting of the BSR of the predefined type has been triggered in the LC), but not carry the data in the other LC groups (LCG2).

As an embodiment, if the reporting of the BSR of the predefined type is triggered in one LC or one LC group, the reporting of the BSRs triggered in other LCs or other LC groups is canceled.

As an embodiment, if the reporting of the BSR of the predefined type is triggered in one LC or one LC group, and there are the reporting of other BSRs triggered in other LCs or other LC groups for the same reason (rather than other triggering conditions such as triggering due to the regular BSR), these LCs or these LC groups may be multiplexed in the same MAC-CE during the reporting of the BSR of the predefined type. As an embodiment, the MAC-CE carries a buffer size of only one LC or one LC group for reporting information, and the reporting of the BSR is triggered in the LC or the LC group since the BSR is the BSR of the predefined type (e.g. the remaining delay budget of the reported buffer size of the LC or the LC group is less than or equal to the preset threshold).

As an embodiment, the BSR of the predefined type may carry the volume of data it is reporting, i.e., the buffer size, but does not carry remaining delay budget information of the data. When the base station receives the BSR of the predefined type, it is known that the buffer size is less than or lower than the threshold. In this way, there is no need to indicate the remaining delay budget information of the carried data when reporting the BSR, and thus signaling overhead is saved.

As an embodiment, the BSR of the predefined type may carry the volume of data it is reporting, i.e., the buffer size. Optionally, it may also carry the remaining data delay budget information of the data. When the base station receives the BSR of the predefined type, the remaining data delay budget information of the buffer size is known by the base station. In this way, by carrying the remaining data delay budget information, the base station may be informed more accurately.

4. When the protocol makes an agreement or the network configures that the BSR (the BSR of the predefined type) is reported for specific data at the level of the plurality of LCs or the plurality of LC groups, some agreements or configurations may be performed to ensure a consistent understanding between the terminal and the network side device.

As an embodiment, if the BSR of the predefined type carries the volume of data to be transmitted or the buffer size of the plurality of LCs or the plurality of LC groups, the protocol agreement or the network configuration specifies that since a volume of data to be transmitted or a buffer size of any one LC or any one LC group is less than or equal to the preset threshold, the reporting is triggered (i.e., the reporting in all the multiplexed LC groups is triggered for the same reason).

As an embodiment, the MAC-CE carries buffer size of more than one LCs or more than one LC groups for reporting information. The BSR reporting in any LC or LC group is triggered due to the BSR of the predefined type (e.g., the remaining delay budget of the reported buffer size of any LC or LC group is less than or equal to the preset threshold).

As an embodiment, the BSR of the predefined type reports the volume of data to be transmitted or the buffer size of the first LC group LCG1 and the second LC group LCG2. That is, reporting the volumes of data to be transmitted or the buffer sizes of both LC groups are triggered because they are less than or equal to the preset threshold (i.e., reporting in all the multiplexed LC groups are triggered for the same reason).

As an embodiment, if the BSR of the predefined type carries the volumes of data to be transmitted or the buffer sizes of the plurality of LCs or the plurality of LC groups, the protocol agreement or the network configuration specifies that reporting a volume of data to be transmitted or the buffer size of a specific LC or a specific LC group is triggered if it is less than or equal to the preset threshold. This has the advantage of facilitating multiplexing of the MAC-CE when reporting the BSR in the LC or the LC group that is not triggered for this reason (e.g., it is triggered since the BSR is the regular BSR).

As an embodiment, the reporting of the BSR of the predefined type and the reporting of the BSR of other types, such as the regular BSR, etc., may be multiplexed in the same MAC-CE.

As an embodiment, the MAC-CE carries buffer size of more than one LCs or more than one LC groups for reporting information. Reporting the specified portion of the LCs or the LC groups by the BSR is triggered due to the BSR of the predefined type (e.g., the remaining delay budget of the reported buffer size of the specified portion of the LCs or the LC groups is less than or equal to the preset threshold). As an embodiment, the BSR of the predefined type reports the volumes of data to be transmitted or the buffer sizes of the LCG1 and the LCG2. The base station determines that reporting the volume of data to be transmitted or the buffer size of one specific LCG is triggered since the corresponding volume or buffer size is less than or equal to the preset threshold (i.e., reporting in the first of the multiplexed LC groups is triggered by its volume of data to be transmitted being less than the threshold, and BSR reporting for the volume of data to be transmitted or the buffer size of the second LCG is triggered only for other reasons, e.g., the BSR is the regular BSR).

5. There is a need to add an extended LCID to indicate the reporting of BSR of the predefined type.

As an embodiment, when the base station receives the extended LCID indicating the BSR of the predefined type, the base station is informed that the remaining data delay budget of the volume of terminal buffered data or the buffer size reported in the BSR is less than or equal to a certain threshold, i.e., the delay budget is about to be exhausted. Thus, the base station may accelerate the scheduling process.

As an embodiment, an LCID is reserved.

For example, the extended LCID indicating the reporting of BSR of the predefined type is only for a MAC-CE of the short BSR type; and the extended LCID indicating the reporting of BSR of the predefined type is not needed for a MAC-CE of the long BSR type.

As an embodiment, two LCIDs are reserved.

For example, one LCID for reporting the BSR of the predefined type in the short format and one LCID for reporting the BSR of the predefined type in the long format.

As shown in FIG. 7, embodiments of the disclosure provide an apparatus for controlling information transmission. The apparatus is configured in a terminal, and includes a reporting unit 10.

The reporting unit 10 is configured to, when detecting that predefined data exists in an LC, report a BSR of a predefined type.

In an embodiment, the reporting unit 10 is configured to report the BSR of the predefined type for an LC or an LC group where the predefined data is located.

In an embodiment, the BSR of the predefined type indicates that a remaining data delay budget of the predefined data is less than or equal to a preset threshold.

In an embodiment, the reporting unit 10 is configured to report the BSR of the predefined type for a plurality of multiplexed LCs or a plurality of multiplexed LC groups associated with the predefined data.

In an embodiment, the BSR of the predefined type indicates that a remaining data delay budget of the predefined data in at least one target LC among the plurality of multiplexed LCs is less than or equal to a preset threshold, or that a remaining data delay budget of the predefined data in at least one target LC group among the plurality of multiplexed LC groups is less than or equal to the preset threshold.

In an embodiment, the reporting unit 10 is configured to report the BSR of the predefined type and a preset ID, in which the preset ID indicates a base station to obtain a volume of data to be transmitted in the BSR of the predefined type.

In an embodiment, the preset ID includes a MAC-CE extended LCID of at least one BSR in a predefined format.

The LCID indicates the base station to obtain the volume of data to be transmitted in the BSR of the predefined type when the BSR of the predefined type is a BSR in the predefined format.

In an embodiment, the predefined data includes data obtained from an NAS or an application layer for a predefined service.

In an embodiment, detecting that the predefined data exists in the LC includes: detecting that a remaining data delay budget corresponding to buffered data in the LC is less than or equal to a preset threshold.

In an embodiment, the reporting unit 10 is configured to perform statistical analysis on the predefined data based on a data packet or a data packet set, and generate the BSR of the predefined type based on a statistical result; and report the BSR of the predefined type.

As shown in FIG. 8, embodiments of the disclosure provide an apparatus for controlling information transmission. The apparatus is configured in a network device, and includes a receiving unit 20.

The receiving unit 20 is configured to, receive a BSR of a predefined type reported by a terminal when predefined data exists in an LC.

In an embodiment, the BSR of the predefined type includes: the BSR of the predefined type for an LC or an LC group where the predefined data is located.

In an embodiment, the receiving unit 20 is configured to determine, based on the BSR of the predefined type, that a remaining data delay budget of the predefined data is less than or equal to a preset threshold.

In an embodiment, the BSR of the predefined type includes: the BSR of the predefined type for a plurality of multiplexed LCs or a plurality of multiplexed LC groups associated with the predefined data.

In an embodiment, the receiving unit 20 is configured to determine, based on the BSR of the predefined type, that a remaining data delay budget of the predefined data in at least one target LC among the plurality of multiplexed LCs is less than or equal to a preset threshold, or that a remaining data delay budget of the predefined data in at least one target LC group among the plurality of multiplexed LC groups is less than or equal to the preset threshold.

In an embodiment, the receiving unit 20 is configured to receive the BSR of the predefined type and a preset ID reported by the terminal when the predefined data exists in the LC, in which the preset ID indicates the BSR of the predefined type.

The receiving unit 20 is further configured to obtain a volume of data to be transmitted in the BSR of the predefined type based on the preset ID; and if a remaining data delay budget corresponding to the volume of data to be transmitted is less than or equal to a preset threshold, perform data transmission scheduling based on the BSR of the predefined type.

In an embodiment, the preset ID includes a MAC-CE extended LCID of at least one BSR in a predefined format; and obtaining the volume of data to be transmitted in the BSR of the predefined type based on the preset ID includes: obtaining the volume of data to be transmitted in the BSR of the predefined type based on the preset ID when the BSR of the predefined type is a BSR in the predefined format.

In an embodiment, the predefined data includes data obtained from an NAS or an application layer for a predefined service.

In an embodiment, there being the predefined data located in the LC includes: a remaining data delay budget corresponding to buffered data in the LC being less than or equal to a preset threshold.

Embodiments of the disclosure provide a communication device. The communication device includes: a memory for storing instructions executable by a processor; and the processor connected to the memory respectively. The processor is configured for implementing the method for controlling information transmission provided in any technical solution described above.

The processor may include various types of storage media that are non-transitory computer storage media capable of continuing to memorize information stored thereon after the communication device is powered down.

In this case, the communication device includes: a terminal or a network element, which may be any one of the first network element to the fourth network element described above.

The processor may be connected to the memory through a bus or the like for reading an executable program stored on the memory, e.g., at least one method shown in FIG. 2 to FIG. 6.

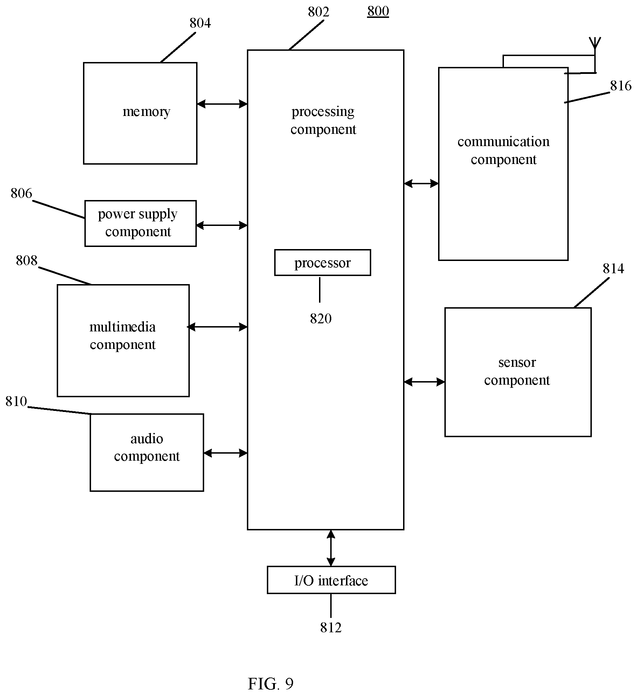

FIG. 9 is a structural block diagram illustrating a terminal 800 according to an embodiment of the disclosure. For example, the terminal 800 may be a cell phone, a computer, a digital broadcasting terminal, a message transceiver device, a gaming console, a tablet device, a medical device, a fitness device, a personal digital assistant, etc.

Referring to FIG. 9, the terminal 800 may include one or more of the following components: a processing component 802, a memory 804, a power supply component 806, a multimedia component 808, an audio component 810, an inputs/outputs interface (I/O) 812, a sensor component 814, and a communication component 816.

The processing component 802 generally controls the overall operation of the terminal 800, such as operations associated with displays, telephone calls, data communications, camera operations, and recording operations. The processing component 802 may include one or more processors 820 to execute instructions to accomplish all or some of the steps of the method described above. Alternatively, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operation at the device 800. Examples of such data include instructions for any application or method operated on the terminal 800, contact data, phone book data, messages, pictures, videos, etc. The memory 804 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD-ROM.

The power supply component 806 provides power to the various components of the terminal 800. The power supply component 806 may include a power management system, one or more power supplies, and other components associated with generating, managing, and distributing power for the terminal 800.

The multimedia component 808 includes a screen providing an output interface between the terminal 800 and a user. In some embodiments, the screen may include a liquid crystal display (LCD) and a touch panel (TP). In case the screen includes a touch panel, the screen may be implemented as a touch screen to receive input signals from the user. The touch panel includes one or more touch sensors to sense touches, swipes, and gestures on the touch panel. The touch sensors may sense a boundary of a touch or swipe action, and detect a duration and pressure associated with the touch or swipe operation. In some embodiments, the multimedia component 808 includes a front-facing camera and/or a rear-facing camera. The front camera and/or the rear camera may receive external multimedia data when the terminal 800 is in an operating mode, such as a shooting mode or a video mode. Each of the front camera and the rear camera may be a fixed optical lens system or have a focal length and optical zoom capability.

The audio component 810 is configured to output and/or input audio signals. For example, the audio component 810 includes a microphone (MIC) that is configured to receive external audio signals when the terminal 800 is in an operational mode, such as a call mode, a recording mode, and a voice recognition mode. The received audio signals may be further stored in the memory 804 or sent in the communication component 816. In some embodiments, the audio component 810 further includes a speaker for outputting audio signals.

The I/ O interface 812 provides an interface between the processing component 802 and a peripheral interface module, said peripheral interface module may be a keypad, a click wheel, buttons, etc. These buttons may include, but are not limited to: a home button, a volume button, a start button, and a lock button.

The sensor component 814 includes one or more sensors for providing various aspects of status assessment for the terminal 800. For example, the sensor component 814 may detect an open/closed state of the device 800, the relative positioning of components, such as the components being the display and keypad of the terminal 800, the sensor component 814 may also detect a change in the position of the terminal 800 or one of the components of the terminal 800, the presence or absence of user contact with the terminal 800, the orientation of the terminal 800 or acceleration/deceleration of the terminal 800, and the temperature change of the terminal 800. The sensor component 814 may include a proximity sensor configured to detect the presence of a nearby object in the absence of any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate communication between the terminal 800 and other devices by wired or wireless means. The terminal 800 may access a wireless network based on a communication standard, such as Wi-Fi, 2G or 3G, or a combination thereof. In an exemplary embodiment, the communication component 816 receives broadcast signals or broadcast-related information from an external broadcast management system in a broadcast channel. In an exemplary embodiment, the communication component 816 further includes a near field communication (NFC) module to facilitate short-range communication. For example, in the NFC module may be implemented based on radio frequency identification (RFID) technology, infrared data association (IrDA) technology, ultra wide band (UWB) technology, Bluetooth (BT) technology, and other technologies.

In exemplary embodiments, the terminal 800 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In exemplary embodiments, there is also provided a non-transitory computer-readable storage medium including instructions, such as a memory 804 including instructions, the instructions being executable by a processor 820 of the terminal 800 for accomplishing the above-described method. For example, the non-transitory computer-readable storage medium may be an ROM, a random access memory (RAM), a CD-ROM, magnetic tape, a floppy disks, and optical data storage devices, etc.

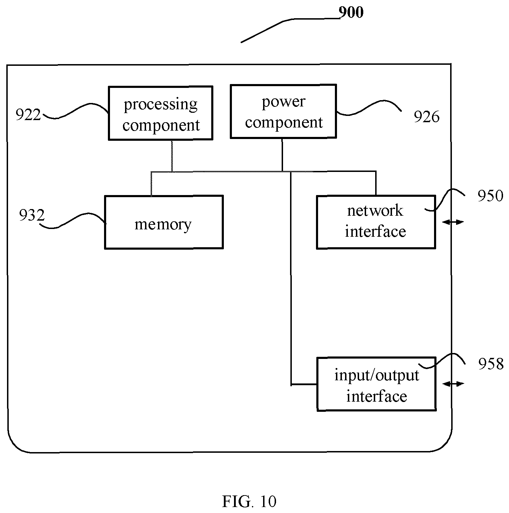

Referring to FIG. 10, an embodiment of the disclosure illustrates a structure of a communication device 900. For example, the communication device 900 may be provided as a network side device. The communication device 900 may be the base station described above.

Referring to FIG. 9, the communication device 900 includes a processing component 922, which further includes one or more processors, and a memory resource represented by a memory 932 for storing instructions that may be executed by the processing component 922, such as an application program. The application program stored in memory 932 may include one or more modules each corresponding to a set of instructions. Alternatively, the processing component 922 is configured to execute the instructions to perform any of the methods applied to the base station as described in the foregoing method, e.g., at least one method shown in FIG. 2 to FIG. 6.

The communication device 900 may also include a power component 926 configured to perform power management of the communication device 900, a wired or wireless network interface 950 configured to connect the communication device 900 to a network, and an input/output (I/O) interface 958. The communication device 900 may operate an operating system based on the operating system stored in the memory 932, such as Windows Server TM, Mac OS XTM, UnixTM, LinuxTM, FreeBSDTM, or the like.

Other implementations of the embodiments of the disclosure will be readily apparent to those skilled in the art from consideration of the specification and practice of the disclosure disclosed herein. This application is intended to cover any modification, use or adaptation of the embodiments of the disclosure which follow the general principles of the embodiments of the disclosure and include common knowledge or conventional technical means in the technical field not disclosed by the embodiments of the disclosure. The specification and examples are to be considered exemplary only, with a true scope and spirit of the embodiments of the disclosure being indicated by the following claims.

It should be understood that the embodiments of the disclosure are not limited to the precise structures described above and shown in the drawings, and various modifications and changes may be made without departing from the scope thereof. The scope of embodiments of the disclosure is limited only by the appended claims.

## Claims

1. A method for controlling information transmission, performed by a terminal, comprising:
when detecting that predefined data exists in a logical channel (LC), reporting a buffer status report (BSR) of a predefined type.

2. The method according to claim 1, wherein reporting the BSR of the predefined type comprises:
reporting the BSR of the predefined type for an LC or an LC group where the predefined data is located.

3. The method according to claim 2, wherein the BSR of the predefined type indicates that a remaining data delay budget of the predefined data is less than or equal to a preset threshold.

4. The method according to claim 1, wherein reporting the BSR of the predefined type comprises:
reporting the BSR of the predefined type for a plurality of multiplexed LCs or a plurality of multiplexed LC groups associated with the predefined data.

5. The method according to claim 4, wherein the BSR of the predefined type indicates that a remaining data delay budget of the predefined data in at least one target LC among the plurality of multiplexed LCs is less than or equal to a preset threshold, or that a remaining data delay budget of the predefined data in at least one target LC group among the plurality of multiplexed LC groups is less than or equal to the preset threshold.

6. The method according to claim 1, wherein reporting the BSR of the predefined type comprises:
reporting the BSR of the predefined type and a preset identity (ID), wherein the preset ID indicates a base station to obtain a volume of data to be transmitted in the BSR of the predefined type.

7. The method according to claim 6, wherein the preset ID comprises a media access control-control element (MAC-CE) extended logical channel ID (LCID) of at least one BSR in a predefined format;
the LCID indicates the base station to obtain the volume of data to be transmitted in the BSR of the predefined type when the BSR of the predefined type is a BSR in the predefined format.

8. The method according to claim 1, wherein the predefined data comprises data obtained from a non access stratum (NAS) or an application layer for a predefined service.

9. The method according to claim 1, wherein detecting that the predefined data exists in the LC comprises:
detecting that a remaining data delay budget corresponding to buffered data in the LC is less than or equal to a preset threshold.

10. The method according to claim 1, wherein reporting the BSR of the predefined type comprises:
performing statistical analysis on the predefined data based on a data packet or a data packet set, and generating the BSR of the predefined type based on a statistical result; and
reporting the BSR of the predefined type.

11. A method for controlling information transmission, performed by a network device, comprising:
receiving a buffer status report (BSR) of a predefined type reported by a terminal when predefined data exists in a logical channel (LC).

12. The method according to claim 11, wherein the BSR of the predefined type comprises:
the BSR of the predefined type for an LC or an LC group where the predefined data is located.

13. The method according to claim 12, further comprising:
determining, based on the BSR of the predefined type, that a remaining data delay budget of the predefined data is less than or equal to a preset threshold.

14. The method according to claim 11, wherein the BSR of the predefined type comprises:
the BSR of the predefined type for a plurality of multiplexed LCs or a plurality of multiplexed LC groups associated with the predefined data.

15. The method according to claim 14, further comprising:
determining, based on the BSR of the predefined type, that a remaining data delay budget of the predefined data in at least one target LC among the plurality of multiplexed LCs is less than or equal to a preset threshold, or that a remaining data delay budget of the predefined data in at least one target LC group among the plurality of multiplexed LC groups is less than or equal to the preset threshold.

16. The method according to claim 11, wherein receiving the BSR of the predefined type reported by the terminal when the predefined data exists in the LC comprises:
receiving the BSR of the predefined type and a preset identity (ID) reported by the terminal when the predefined data exists in the LC, wherein the preset ID indicates the BSR of the predefined type;
the method further comprises:
obtaining a volume of data to be transmitted in the BSR of the predefined type based on the preset ID; and
if a remaining data delay budget corresponding to the volume of data to be transmitted is less than or equal to a preset threshold, performing data transmission scheduling based on the BSR of the predefined type.

17. The method according to claim 16, wherein the preset ID comprises a media access control-control element (MAC-CE) extended logical channel ID (LCID) of at least one BSR in a predefined format; and
obtaining the volume of data to be transmitted in the BSR of the predefined type based on the preset ID comprises:
obtaining the volume of data to be transmitted in the BSR of the predefined type based on the preset ID when the BSR of the predefined type is a BSR in the predefined format.

18. The method according to claim 11, wherein the predefined data comprises data obtained from a non access stratum (NAS) or an application layer for a predefined service.

19. The method according to claim 11, wherein there being the predefined data located in the LC comprises:
a remaining data delay budget corresponding to buffered data in the LC being less than or equal to a preset threshold.

20. An apparatus for controlling information transmission, configured in a terminal, comprising:
a reporting unit, configured to, when detecting that there is predefined data in a logical channel (LC), report a buffer status report (BSR) of a predefined type.

21. An apparatus for controlling information transmission, configured in a network device, comprising:
a receiving unit, configured to, receive a buffer status report (BSR) of a predefined type reported by a terminal when predefined data exists in a logical channel (LC).

22. A communication device comprising a processor and a memory storing instructions executable by the processor which, when executed by the processor, implement the method according to any one of claims 1 to 10 or the method according to any one of 11 to 19.

23. A computer storage medium, storing a computer-executable program which, when executed by a processor, enable the method according to any one of claims 1 to 10 or the method according to any one of 11 to 19 to be implemented.
